# FASCICULE DE BREVET EUROPEEN

(11) **EP 0 278 838 B1**
(45) Date de publication et mention de la délivrance du brevet: **20.10.1993**
(21) Numéro de dépôt: 88400185.0
(22) Date de dépôt: 28.01.1988
(51) Int. Cl.: A01G 3/03

(54) **Sécateur-élagueur**
Hecken- und Astschere
Pruning shears

(30) Priorité: 30.01.1987 FR 8701226
(43) Date de publication de la demande: 17.08.1988
(73) Titulaire: Bidou, Fernand, F-47300 Villeneuve sur Lot (FR)
(72) Inventeur: Bidou, Fernand, F-47300 Villeneuve sur Lot (FR)

(56) Documents cités:
- FR-A- 715 557
- GB-A- 1 185 863
- GB-A- 2 100 648
- US-A- 2 312 766

## Description

L'invention concerne un outil pour la taille et l'élagage des arbres lequel par la combinaison de ses moyens mécaniques permet la réduction de l'encombrement des pièces. L'outil comprend une mâchoire fixe composant une lame crochet dégagée au sommet et solidaire d'un prolongement support sur lequel est fixé par un pivot une seconde mâchoire formant une lame tranchante qui est percée d'un second trou d'articulation pour être reliée par un moyen rigide entre deux pivots à un levier inter-appui situé au dessous des mâchoires et articulé au moyen d'un pivot sur le prolongement support; le point d'application au levier de la force exercée manuellement au moyen d'un cordeau disposé librement le long du manche fixé à la base du prolongement support est situé du coté des mâchoires et au dessous et en retrait de ces mâchoires, ce levier est rappelé par un ressort.

La formation des arbres en haute tige, la taille des arbres fruitiers l'élagage des peupliers et autres essences d'arbres sollicitent l' emploi d'outils permettant d'effectuer ces travaux dans les meilleurs moyens de facilité et de qualité de la coupe relativement à la bonne circulation des bois

Certains outils connus de ce genre ont une lame solidaire d'un levier qui dépasse au sommet de la mâchoire cisaille et oscille en décrivant un arc de cercle de rayon mesurant quinze centimètres environ, ce levier en action heurte fréquemment les branches et les rameaux en leur provoquant des blessures ou des cassures; de tels outils sont peu commodes à positionner et ne permettent pas toujours de couper les branches correctement au bon endroit notamment pour la taille des arbres fruitiers; la traction appliquée au point (force) du levier provoque la flexion du manche qui doit être solidement fixé à l'outil Un outil décrit dans le document GB-A-2100648 présente par rapport aux outils traditionnels précités des perfectionnements tendant à réduire l'encombrement du levier inter-appui solidaire de la lame en raccourcissant le bras de levier et en appliquant un levier inter-résistant disposé plus bas sur le support et relié au levier inter-appui par une bielle ; l'encombrement de cet outil n'est que partiellement réduit ,sa puissance de coupe développée par le système nécessite une course de commande de mouvement plus grande et le manche de l'outil est encore soumis à la flexion. Les autres outils connus ont la commande manuelle située à une distance invariable du point d'action de leurs mâchoires cisaille obligeant l'utilisateur à se placer à différents niveâux entrainant ainsi la mise en oeuvre de moyens accessoires tels que échelle ou nacelle.

Le sécateur-élagueur selon l'invention permet d'éviter ces inconvénients, la mâchoire cisaille fixe ou lame crochet se dégage au dessus du dispositif qui multiplie et transmet la force initiale manuelle à la lame articulée dont la longueur peut correspondre à la longueur de la lame crochet fixe pour leur permettre de couper au plus près de leur extrémité. La lame articulée est actionnée à partir d'un point situé près de son extrémité, à l'arrière du tranchant, au moyen d'une bielle qui la relie à un levier inter-appui situé au dessous et disposé en croisement sur le support qui forme au sommet la lame crochet et à sa base un moyen de raccordement à un manche. Un cordeau qui sert à transmettre la commande manuelle au levier est assujetti au bout de ce levier situé du coté et au dessous de la lame articulée, au moyen d'une poulie à gorge qu'il chevauche, et ensuite relié à un point déterminé de la douille de raccordement au manche. Selon une variante le cordeau peut être fixé seulement au levier. Un ressort de rappel est disposé très près du support général qui lui sert d'appui pour agir sur le levier.

Le dispositif selon l'invention facilite l'utilisation de l'outil et permet d'effectuer des tailles correctes même sur des arbres très branchus. La combinaison des moyens qui actionnent la lame articulée permet de réduire l'encombrement des pièces, notamment du levier, et d'augmenter la puissance de coupe de la lame. L'emplacement du cordeau présente l'avantage de réduire la force résultante qui a effet de flexion sur le manche et d'améliorer l'efficacité de coupe des lames. Le manche étant peu sollicité à la flexion est utilement conçu plus léger.

L'invention est exposée ci-après à l'aide de dessins représentant à titre d'exemple non limitatif deux modes de réalisation.

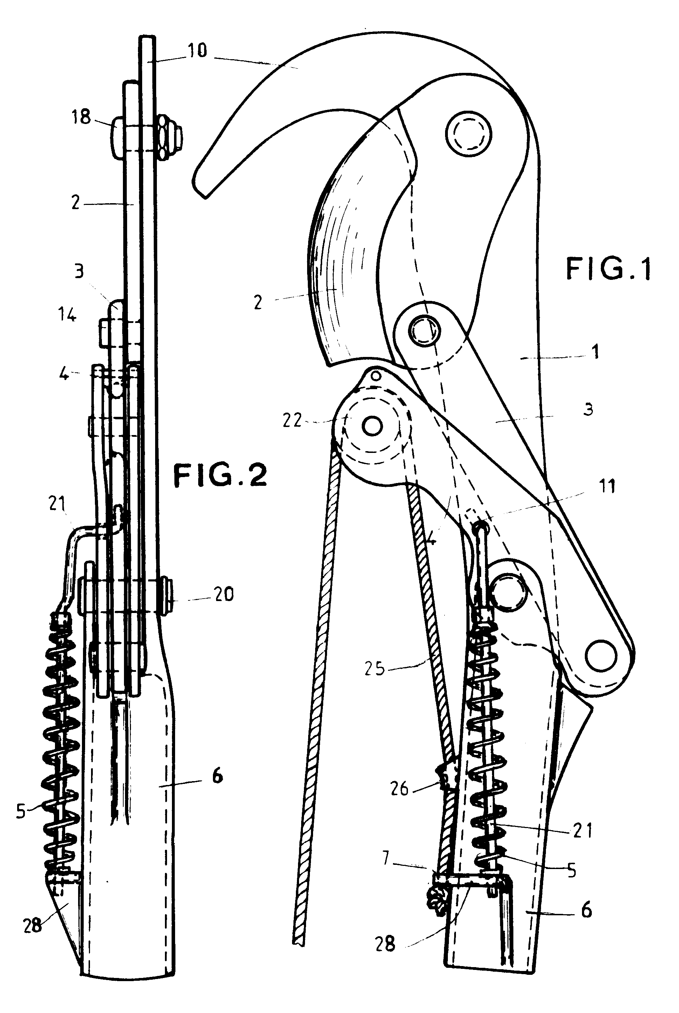

Tel qu'il est représenté (Fig.1) et (Fig.2) le dispositif comporte un support général en forme de serpette présentant une mâchoire fixe ou lame crochet 10 solidaire d'un prolongement 1 soudé à une douille 6. Une lame 2 est montée en articulation avec la lame crochet 10 au moyen d'un axe 18 comportant un écrou de réglage à la manière d'un boulon à écrou freiné. Un levier 4 est articulé en son point d'appui au moyen d'un axe 20 sur le support 1. Une bielle 3 est articulée d'un bout au moyen d'un tourillon 14 sur la lame 2 et de l'autre bout au moyen d'un axe sur le levier 4 . Un ressort 5 monté sur une tige 21 articulée au trou 11 du levier 4 et assujettie dans le trou du guide support 28 sollicite le levier 4 à rappeler la lame 2 jusqu'a l'ouverture maximale des mâchoires. Un cordeau 25 fixé au point 7 du support 28 passe dans le guide 26 et sur la poulie à gorge 22 et s'étend ensuite librement le long du manche.

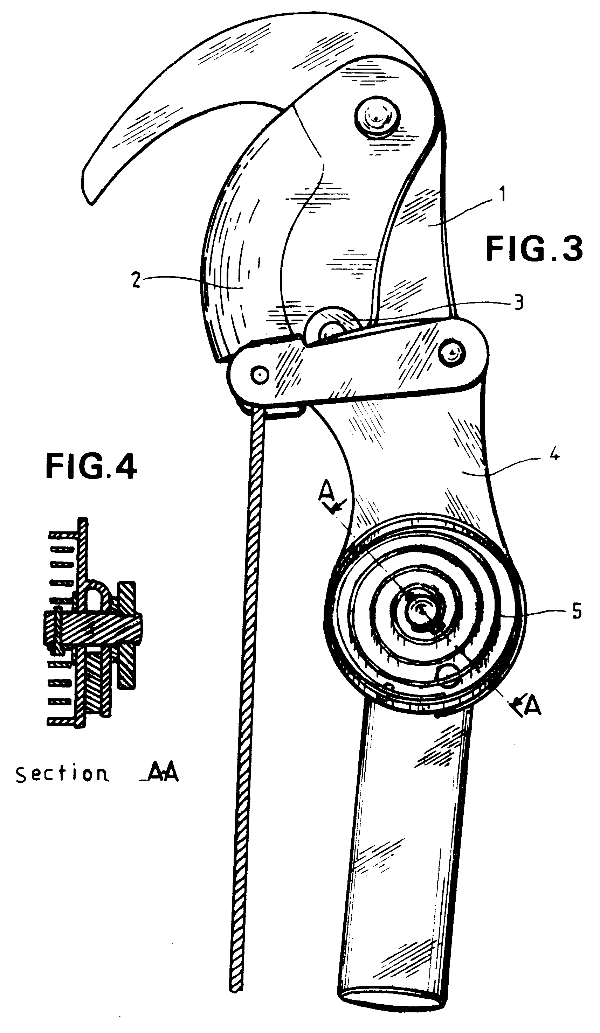

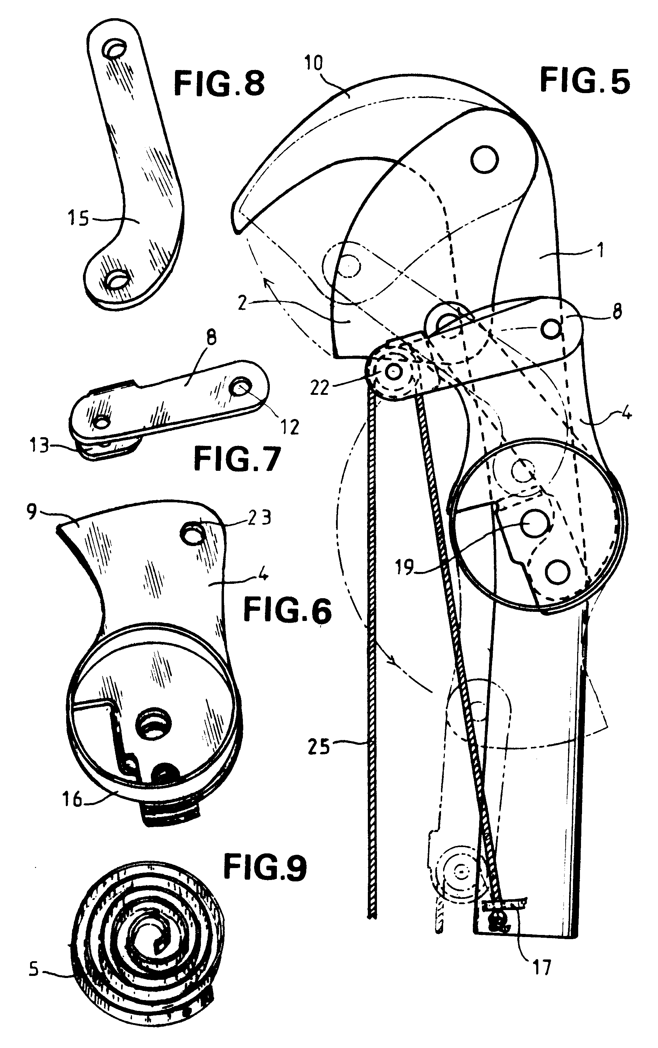

Selon une variante du dispositif représentée (Fig.3) et (Fig.5) le levier inter-appui 4 représenté isolé (Fig.6) peut osciller d'un demi tour au moyen de sa rallonge 8 représentée isolée (Fig.7) articulée par son trou I2 axé au trou 23 du levier jusqu'a son contact d'appui sur le secteur 9. La rallonge 8 forme une chape 13 qui peut être pourvue facultativement d'une poulie à gorge. La bielle 3 représentée isolée (Fig.8) forme une courbe I5 permettant l'oscillation de un demi tour du levier 4. Le ressort de rappel 5 représenté isolé (Fig.9) formé en spirale est logé dans la cage cylindrique 16 du levier 4 et est fixé d'un bout sur l'axe 19 monté fixe sur le support 1 et fixé de l'autre bout à la cage 16 qui le contient. La base du support qui forme le moyen de fixation du manche comporte un oeillet I7 pour fixation du cordeau 25. Les positions extrêmes des pièces articulées correspondant à la fermeture de l'outil sont représentées en trait mixte fin. Selon une autre variante du dispositif de la présent invention la bielle et le levier inter-appui peuvent ensemble se présenter sous la forme d'une crémaillère; la bielle est pourvue à cet effet d'une denture engrenant avec le levier qui a la forme d'un pignon solidaire et concentrique d'une poulie à gorge sur laquelle s'enroule de un tour le cordeau de traction; la crémaillère est guidée latéralement entre le support général et le flanc du levier circulaire et par un galet assujetti sur le support général pour effet de butée mobile assurant l'engrenage des dentures. Le rappel du mouvement de la crémaillère peut être assuré par un ressort de traction de forme "boudin" accroché d'un bout à l'extrémité inférieure de la crémaillère et de l'autre bout à la base du support général.

Le dispositif objet de l'invention peut être utilisé pour la taille des arbres fruitiers, des treilles, ainsi que pour l'élagage et la formation des arbres d'ornement et autres arbres forestiers.

## Revendications

1. Sécateur-élagueur dont la combinaison des moyens mécaniques permet la réduction de l'encombrement des pièces comprenant: une mâchoire fixe (10) composant une lame crochet dégagée au sommet et solidaire d'un prolongement support (1) sur lequel est fixée par un pivot une seconde mâchoire (2) formant une lame tranchante percée d'un second trou d'articulation pour être reliée par un moyen rigide (3) entre deux pivots d'articulation à un levier inter-appui (4) situé au dessous des mâchoires et articulé en son point d'appui sur le prolongement support (1), le levier inter-appui (4) ou le moyen rigide (3) articulés étant sollicités par un ressort pour rappeler la mâchoire (2) actionnée par une force de traction exercée manuellement au levier inter-appui (4) au moyen d'un cordeau (25) situé dans le sens du manche fixé à la base du prolongement support (1), la disposition des pièces articulées se caractérisant en ce que le levier inter-appui (4) est disposé en croisement sur le support (1), en ce que le moyen de liaison rigide (3) est situé en croisement par rapport au support (1) et en ce que le point force du levier inter-appui (4) auquel est appliquée la commande du mouvement au moyen d'un cordeau (25) est situé au dessous des mâchoires et du même coté par rapport au prolongement support (1) que les mâchoires.

2. Sécateur-élagueur selon la revendication 1 caractérisé en ce que le prolongement support (1) est fixé à un manche selon un angle déterminé.

3. Sécateur-élagueur selon la revendication 1 caractérisé en ce que la seconde mâchoire (2) est dimensionnée pour être actionnée en son trou d'articulation situé à l'arrière du tranchant.

4. Sécateur-élagueur selon la revendication 1 caractérisé en ce que le moyen de liaison rigide (3) articulé à la second mâchoire (2) et au levier inter-appui (4) est une bielle.

5. Sécateur-élagueur selon la revendication 1 caractérisé en ce que le levier inter-appui (4) est formé en secteur de cercle.

6. Sécateur-élagueur selon la revendication 5 caractérisé en ce que le levier inter-appui (4) comporte une rallonge articulée.

7. Sécateur-élagueur selon la revendication 1 caractérisé en ce que le moyen rigide articulé (3) reliant le levier inter-appui (4) à la seconde mâchoire (2) compose avec le levier inter-appui (4) une crémaillère.

8. Sécateur-élagueur selon la revendication 1 et la revendication 7 caractérisé en ce que le ressort de rappel peut être un ressort de traction.

## Claims

1. Pruning shears where the combination of mechanical means permits a reduction in the overall size of the parts. These parts include :
- a hooked standing edge (10) which is rounded off at the top and extends downwards to form an integral shank and pole mount (1). The lower cutting blade is affixed to the shank by means of a pivot pin (2). This cutting blade is perforated to hold a a second pivot pin attaching it to a cross-lever (4) by means of a rigid link arm (3) which articulates between two pivot pins. The cross-lever (4) is placed below the lower cutting blade and is hinged to the shank (1) by means of a fixed fulcrum. The articulated cross-lever (4) and the rigid link arm (3) are activated by means of a return spring which pulls up the lower cutting blade through manual traction on the cross-lever (4), applied by means of a cord (25) running parallel to the pole fixed to the pole mount at the base of the integral shank (1).
The lay-out of the articulated parts is characterised in that :
- the cross-lever (4) is placed cross-wise to the shank (1),
- the rigid link arm (3) is in a cross-wise position in relation to the shank (1)
- the load point of the cross-lever (4), to which traction is applied by means of the cord (25), is placed below the cutting blade and on the same side as the cutting blade in relation to the shank (1).

2. Pruning shears according to Claim 1, and characterised by a specified angle of fixation of the pole to the integral shank and pole mount (1).

3. Pruning shears according to Claim 1, and characterised in that the dimensions of the lower cutting blade (2) allow it to be moved by means of a pivot pin placed behind the cutting edge.

4. Pruning shears according to Claim 1, and characterised in that the rigid link arm (3),which articulates with the lower cutting blade (2) and the cross-lever (4), is a connecting rod.

5. Pruning shears according to Claim 1, and characterised in that the cross-lever (4) is shaped to form a sector of a circle.

6. Pruning shears according to Claim 5, and characterised in that the cross-lever (4) is lengthened by means of an articulated extension.

7. Pruning shears according to Claim 1, and characterised in that the rigid link arm (3) connecting the cross-lever (4) to the lower cutting blade (2) forms a rack and pinion assembly with the cross-lever (4).

8. Pruning shears according to Claim 1 and Claim 7, and characterised in that the return spring may be a draw spring.

## Patentansprüche

1. Hecken-und Astschere, deren zusammengestellte mechanische Mittel eine Verminderung des Raumbedarfs der Einzelteile erlauben, nämlich : eine unbewegliche Backe (10) mit folgender Verfertigung : ein Häkchenmesser an der Spitze losgelöst, und an solche Verlängerung-Stütze (1) gebunden, auf welche durch einen Drehzapfen eine zweite Backe (2) festgesetzt wird, so bildend eine schneidende Klinge mit einem Gelenkverbindungsloch durchbohrt, um durch ein steifes Mittel (3) zwischen zwei Gelenkverbindungsachsen an einen Zwischen-Auflager-Hebel angesetzt (4), der über den Backen steht, und in seinem Stützpunkt auf der Verlängerung - Stütze (1) angeschlossen wird : der Zwischen-Auflager-Hebel (4) oder das steife Mittel (3) werden soeben durch eine Federung beansprucht um die Backe (2) zurückzurufen, die durch eine mit Hand geübter Zugkraft auf den Zwischen-Auflager-Hebel (4) angetrieben wird, zwar mittels einer Leine (25) die längs des an den Unterbau der Verlängerung-Stütze (1) festgestellten Stiels hängt ; die Verteilung der angeschlossenen Einzelteile wird damit kennzeichnet, dass der Zwischen-Auflager-Hebel (4) in Kreutz auf der Stütze (1) hergestellt wird, dass auch das steife Bindungsmittel (3) in Kreutz gegenüber der Stütze (1) steht, endlich dass der Kraftpunkt des Zwischen-Auflager-Hebels (4) ,an welchen die Steuerung der Bewegung mittels einer Leine (25) haftet, unterhalb der Backen und gerade auf der selben Seite wie die Backen, gegenüber der Verlängerung-Stütze (1) liegt.

2. Hecken-und-Astschere gemäss dem Anspruch Nr 1 damit kennzeichnet, dass die Verlängerung-Stütze (1) an einen Stiel nach bestimmten Winkel hergestellt wird.

3. Hecken-und-Astschere gemäss dem Anspruch Nr 1, damit kennzeichnet, dass die zweite Backe (2) so abgemesst wird, um in ihrem Gelenkverbindungsloch angetrieben zu werden, das hinter der Schneide liegt.

4. Hecken-und-Astschere gemäss dem Anspruch Nr 1, damit kennzeichnet, dass das an die zweite Backe (2) und an den Zwischen-Auflager-Hebel (4) angeschlossene steife Verbindungsmittel ein Pleuel ist.

5. Hecken-und-Astschere gemäss dem Anspruch Nr 1 damit kennzeichnet, dass der Zwischen-Auflager-Hebel (4) nach einer Kreisausschnitt-Figur ausgebildet wird.

6. Hecken-und Astschere gemäss dem Anspruch Nr 5 damit kennzeichnet, dass der Zwischen-Auflager-Hebel (4) ein gelenkiges Verlängerungszusatzstück beträgt.

7. Hecken-und Astschere gemäss dem Anspruch Nr 1 damit kennzeichnet, dass das gelenkige steife Mittel (3) ,in Verbindung mit dem Zwischen-Auflager-Hebel (4) sowie mit der zweiten Backe (2) , mit dem Zwischen-Auflager-Hebel (4) eine Zahnleiste ausbildet.

8. Hecken-und Astschere gemäss dem Anspruch Nr 1 und dem Anspruch Nr 7, damit kennzeichnet, dass die Federung zur Zurückberufung eine Zugfederung sein kann.
